# FASCICULE DE BREVET EUROPEEN

(11) **EP 1 400 405 B1**
(45) Date de publication et mention de la délivrance du brevet: **04.01.2006**
(21) Numéro de dépôt: 03292269.2
(22) Date de dépôt: 15.09.2003
(51) Int. Cl.: B60Q 1/04

(54) **Projecteur comportant des moyens d'absorption d'énergie**
Scheinwerfer mit Energieabsorptionsmitteln
Headlamp comprising energy absorbing means

(30) Priorité: 20.09.2002 FR 0211710
(43) Date de publication de la demande: 24.03.2004
(73) Titulaire: VALEO VISION, 93012 Bobigny Cédex (FR)
(72) Inventeur: Arlon, Phillippe, 77330 Ozoir La Ferriere (FR)
(74) Mandataire: Renous Chan, Véronique

(56) Documents cités:
- EP-A- 1 059 200
- EP-A- 1 155 907
- US-A- 4 996 634
- PATENT ABSTRACTS OF JAPAN vol. 2000, no. 13, 5 février 2001 (2001-02-05) & JP 2000 280816 A (MITSUBISHI MOTORS CORP), 10 octobre 2000 (2000-10-10)

## Description

La présente invention concerne un projecteur de véhicule automobile, comportant un boîtier fixé sur un châssis et renfermant une source lumineuse pour l'éclairage du véhicule.

Comme l'ont constaté depuis longtemps les constructeurs automobiles, les projecteurs jouent un grand rôle dans la sécurité passive des véhicules, notamment vis-à-vis des piétons avec lesquels des chocs peuvent avoir lieu.

De tels chocs peuvent provoquer, même à allure réduite (inférieure à 40 km/h), des dommages corporels importants. Aussi est-il courant de munir les projecteurs de moyens d'absorption d'énergie, afin d'amortir le choc subi par un piéton et ainsi diminuer les risques de dommages corporels graves.

Un projecteur selon le préambule des revendications 1, 3 et 5, muni de moyens d'absorption d'énergie est notamment connu de la demande de brevet européen publiée sous le numéro EP-1 059 200.

Il est également connu du brevet US 4 996 634 un pare choc de véhicule renforcé dans lequel est montée une lampe apte à se déplacer en cas de choc. Il est connu de la demande de brevet EP 1 155 907 un projecteur pour véhicule qui est capable de se déformer pour absorber l'énergie d'un choc. Il est enfin connu de la demande de brevet JP 2000 280816 un montage d'un projecteur de façon à ce qu'il bascule vers l'arrière en cas de choc.

Si les projecteurs connus de ce type ont permis de réaliser d'importants progrès en matière de sécurité passive, ils présentent toutefois un certain nombre d'inconvénients.

En particulier, l'ajout de moyens d'absorption d'énergie impose souvent de profondes modifications structurelles du projecteur, avec l'adjonction de nombreuses pièces qui rendent le projecteur plus encombrant, augmentent son poids et grèvent son coût.

L'invention vise notamment à pallier les inconvénients précités en proposant un projecteur qui, tout en assurant une sécurité passive optimale, notamment vis-à-vis des piétons, soit d'un encombrement relativement réduit, et comporte un nombre de pièces limité.

A cet effet, l'invention propose un projecteur de véhicule automobile tel que défini dans les revendications 1, 3 ou 5, qui comporte en outre des moyens de liaison du boîtier au châssis, déformables plastiquement, aptes à absorber, de préférence sans rompre, au moins une partie de l'énergie d'un choc subi par le projecteur.

L'invention comprend le terme projecteur au sens large, englobant tout dispositif d'éclairage et/ou de signalisation pour véhicule.

Le projecteur est ainsi d'un encombrement relativement restreint, tout en possédant de bonnes capacités d'absorption d'énergie. Il est en outre simple à fabriquer et son coût s'avère relativement faible.

Plusieurs modes de réalisation peuvent être choisis pour la mise en oeuvre de l'invention.

Suivant un premier mode de réalisation, les moyens déformables sont aptes à travailler en traction.

Ainsi les moyens déformables peuvent-ils comporter une patte de fixation du boîtier au châssis, cette patte étant apte à s'étirer sous l'effet d'un choc subi par le projecteur.

La patte comporte par exemple un corps ajouré prolongé d'un côté par une partie avant fixée au châssis, et de l'autre côté par une partie arrière fixée au boîtier, le corps étant apte à s'étirer sous l'effet d'une traction exercée sur lesdites parties. La patte peut comporter un corps ajouré ou non ajouré, et présentant localement au moins un rétrécissement de section. Les jours du corps sont de forme variée, par exemple rectangulaire, carrée, toute forme polygonale, hexagonale, ou en forme de losange, ou encore circulaire ou ovale.

En variante, la patte de fixation présente une portion centrale ondulée prolongée d'un côté par une partie avant fixée au châssis, et de l'autre côté par une partie arrière fixée au boîtier, la portion centrale étant apte à s'étirer sous l'effet d'une traction exercée sur lesdites parties.

Suivant un deuxième mode de réalisation, les moyens déformables sont aptes à travailler en flexion.

Ainsi les moyens déformables peuvent-ils comporter une patte de fixation du boîtier au châssis, cette patte présentant un profil en forme de U et comportant deux branches sensiblement parallèles fixées respectivement au boîtier et au châssis et raccordées par une portion courbe, la patte étant apte à se déformer par déplacement de la portion courbe sous l'effet d'un choc subi par le projecteur.

Suivant un troisième mode de réalisation, les moyens déformables sont aptes à travailler en compression.

Ainsi, les moyens déformables peuvent comporter une patte de fixation du boîtier au châssis, cette patte étant apte à se comprimer sous l'effet d'un choc subi par le projecteur.

Une telle patte de fixation présente par exemple une portion centrale ondulée prolongée d'un côté par une partie avant fixée au boîtier, et de l'autre côté par une partie arrière fixée au châssis, les ondulations étant aptes à se resserrer sous l'effet d'un choc subi par le projecteur.

Au lieu d'une telle patte, les moyens déformables peuvent comporter une entretoise, interposée entre le boîtier et le châssis.

Une telle entretoise est par exemple réalisée dans un matériau compressible, et comporte un fût cylindrique plaqué contre le châssis par une première extrémité, et prolongé à l'opposé par une tête recourbée, par laquelle l'entretoise est plaquée contre le boîtier.

En variante, l'entretoise est un organe fonctionnel du véhicule, tel qu'un filtre à air ou un réservoir de liquide lave-glace.

L'invention sera mieux comprise à la lecture de la description qui va suivre, donnée uniquement à titre d'exemple et faite en référence aux dessins annexés dans lesquels :
- la figure 1 est une vue d'élévation en coupe d'un projecteur de véhicule automobile muni de moyens de liaisons déformables comportant une patte de fixation apte à travailler en traction, et présentant un corps ajouré ;
- la figure 2 est une vue de dessus d'une patte de fixation destinée à un projecteur tel qu'illustré sur la figure 1, représentée seule, en l'absence de toute sollicitation ;
- la figure 3 est une vue de dessus de la patte de la figure 2, après que celle-ci a subi un effort de traction ;
- la figure 4 est une vue analogue à la figure 1, où le projecteur est muni de moyens de liaison déformables comportant une patte de fixation ondulée apte à travailler en traction ;
- la figure 5 est une vue analogue à la figure 1, où le projecteur est muni de moyens de liaison déformables comportant une patte de fixation recourbée apte à travailler en flexion ;
- la figure 6 est une vue analogue à la figure 1, où le projecteur est muni de moyens de liaison déformables comportant une patte de fixation ondulée apte à travailler en compression ;
- la figure 7 est une vue analogue à la figure 1, où le projecteur est muni de moyens de liaison déformables comportant une entretoise réalisée dans un matériau compressible ; cet exemple de réalisation ne fait cependant pas partie de la présente invention.
- la figure 8 est une vue de détail représentant partiellement un projecteur monté sur un châssis fixe à l'aide de moyens de liaison comportant une entretoise tubulaire déformable ;
- la figure 9 est une vue en perspective illustrant un projecteur monté sur un châssis fixe par l'intermédiaire d'une pièce fonctionnelle du véhicule.
- Les figures 10A, 10B, 11A et 11B sont des variantes des figures 2 et 3 et sont des vues de pattes déformables par traction

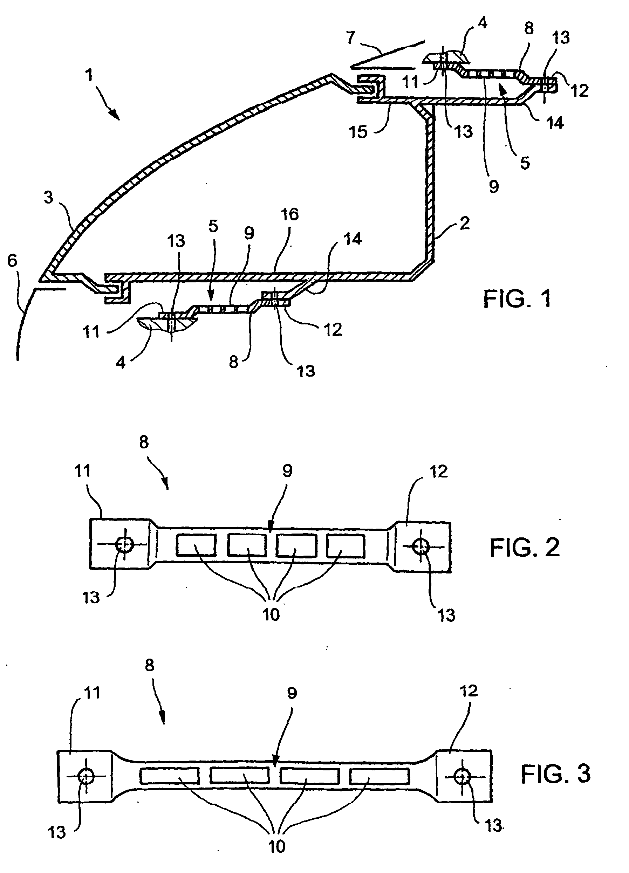

Sur la figure 1 est représenté un projecteur 1 de véhicule automobile comportant un boîtier 2 renfermant un certain nombre de composants internes (non représentés), parmi lesquels une source lumineuse et un réflecteur sur lequel est montée la source dont il réfléchit et diffuse la lumière.

Pour des raisons de commodité, on appellera direction longitudinale la direction générale d'éclairage du projecteur 1. En pratique, cette direction est confondue avec la direction de déplacement du véhicule.

Le projecteur 1 comporte également une glace 3 montée sur le boîtier 2, qu'elle referme à la manière d'un couvercle pour protéger les composants internes tout en transmettant vers l'avant la lumière émise par la source lumineuse.

Le boîtier 2 est fixé sur un châssis 4 formé par le châssis du véhicule, à l'aide de moyens de liaison 5 déformables plastiquement, aptes à absorber, au cours de leur déformation, au moins une partie de l'énergie d'un choc subi par le projecteur 1, sans rompre.

Lors d'un choc avec un obstacle, celui-ci vient heurter la glace 3 qui, de sa position normale d'utilisation où elle affleure des éléments de carrosserie voisins 6, 7, recule sous la poussée de l'obstacle en entraînant le boîtier 2 vers l'arrière.

Le boîtier 2 exerce alors sur les moyens de liaison 5 une contrainte qui, en fonction de leur configuration, peut être une contrainte de traction, de flexion, ou de compression.

Selon un premier mode de réalisation, que l'on décrit à présent en référence aux figures 1 à 4, les moyens de liaison 5 sont aptes à travailler en traction.

Suivant une première variante, illustrée sur les figures 1 à 3, les moyens de liaison 5 comportent une patte 8 de fixation du boîtier 2 au châssis 4, sensiblement plate, apte à s'étirer sous l'effet d'un choc subi par le projecteur 1. Cette patte 8 est réalisée dans un matériau présentant de faibles capacités de déformation élastique, tel qu'un acier ou un thermoplastique dur.

Comme cela est visible sur la figure 2, la patte 8 présente un corps central 9 ajouré, percé d'une série de trous 10 à section rectangulaire. Les trous 10 aident le corps 9 à se déformer. Le corps 9 est prolongé, d'un côté, par une partie avant 11 fixée au châssis 4, et de l'autre côté par une partie arrière 12 fixée au boîtier 2.

Pour leur propre fixation, les parties avant 11 et arrière 12 sont percées de trous 13 pour le passage de vis de fixation propres à venir en prise, respectivement, avec le châssis 4 et le boîtier 2. Ce dernier peut d'ailleurs être muni d'une patte de support 14 en saillie pour la fixation de la partie arrière 12, tel qu'il apparaît sur la figure 1.

Une fois fixée par ses deux extrémités, la patte 8 s'étend longitudinalement entre le boîtier 2 et le châssis 4. Lorsque sous la poussée de l'obstacle le boîtier 2 se déplace longitudinalement vers l'arrière, il tend à entraîner par sa partie arrière 12 la patte 8 qui, fixée par ailleurs au châssis 4 par sa partie avant 11, s'étire sous l'effet de la force de traction ainsi exercée sur ses parties 11, 12, en se déformant plastiquement.

Cette déformation se traduit par une élongation et un amincissement du corps 9, favorisés par la présence des ajours ou des trous 10, tandis que les parties 11, 12 conservent plus ou moins leur forme initiale, comme cela est représenté sur la figure 3. En se déformant sans rompre, la patte 8, qui se comporte comme une éprouvette de traction, absorbe, en partie au moins, l'énergie du choc.

Dans l'exemple illustré, le projecteur 1 comporte deux pattes 8 de fixation, dont l'une est fixée sur une paroi supérieure 15 du boîtier 2, et l'autre sur une paroi inférieure 16. Bien entendu, il est possible de prévoir un plus grand nombre de telles pattes 8, afin d'augmenter la capacité d'absorption d'énergie du projecteur 1.

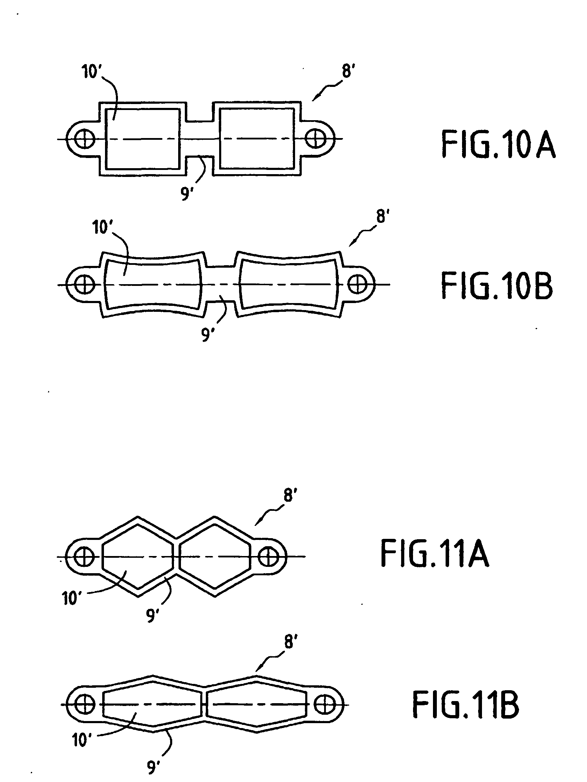

Les figures 10 et 11 sont des variantes : on y voit avant (a) et après (b) déformation ous l'effet de la traction des pattes 8' avec des corps 9' présentant des jours rectangulaires 10' (figure 10) ou hexagonaux (figure 11). A la figure 10, on a une patte présentant un rétrécissement de section dans la zone « pleine » séparant les deux jours. A la figure 11, la forme même des jours fait qu'il y un de fait un rétrécissement de la patte dans la zone du corps délimitant les deux jours. Dans les deux cas, sous l'effet de la traction lors du choc, les Jours 10' s'étirent, la patte 8' se trouvant alors globalement allongée d'au moins 10% de sa longueur totale initiale, par exemple d'environ 20 % . L'allongement peut aussi être supérieur, en fonction du type de matériau et de la forme de la patte.

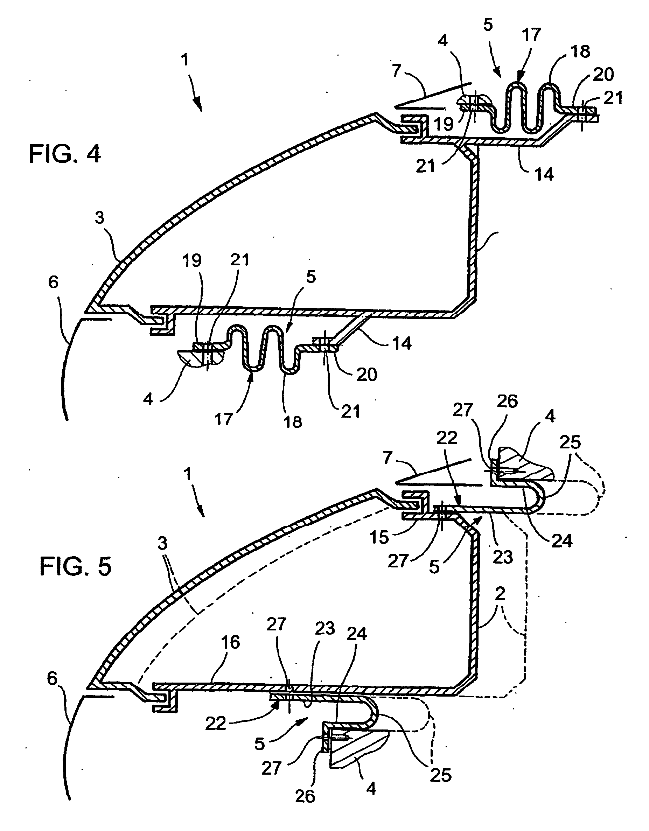

Suivant une deuxième variante illustrée sur la figure 4, les moyens de liaison 5 comportent une patte 17 de fixation du boîtier au châssis, qui présente une portion centrale ondulée 18 prolongée, d'un côté, par une partie avant 19 fixée au châssis 4, et de l'autre côté par une partie arrière 20 fixée au boîtier 2.

La patte 17 est par exemple réalisée par découpe et pliage d'une tôle métallique telle qu'une tôle d'acier, ou par thermoformage d'un matériau thermoplastique dur.

Comme décrit précédemment, les parties 19, 20 peuvent être percées de trous 21 pour le passage de vis de fixation, le boîtier 2 étant quant à lui muni d'un support 14 en saillie pour la fixation de la partie arrière 20.

Lors d'un choc subi par le projecteur 1 avec un obstacle, le boîtier 2 entraîné longitudinalement vers l'arrière tire sur la patte 17 dont la portion ondulée 18 s'étire en se déformant plastiquement, sans rompre, sous l'effet de la force de traction ainsi exercée sur ses parties 19, 20.

De même que pour la première variante décrite ci-dessus, le projecteur 1 comporte deux pattes 17 de fixation, mais on pourrait en prévoir un plus grand nombre en fonction de la quantité d'énergie que le projecteur 1 est destiné à absorber.

Suivant un deuxième mode de réalisation illustré sur la figure 5, les moyens de liaison 5 sont aptes à travailler en flexion, et comprennent à cet effet une patte recourbée 22 de fixation du boîtier 2 au châssis 4, disposée entre ceux-ci.

Cette patte 22, qui présente un profil en forme de U, comporte deux branches 23, 24 sensiblement parallèles étendues longitudinalement, à savoir une branche interne 23, fixée au boîtier 2, et une branche externe 24, fixée au châssis 2, les branches 23, 24 étant raccordées par une portion courbe 25 dont la concavité est tournée vers l'avant.

Comme cela est visible sur la figure 5, la branche externe 24 est munie d'un retour en équerre 26 percé d'un trou 27 pour le passage d'une vis apte à venir en prise avec le châssis 4 pour la fixation de la branche 24 à ce dernier.

La branche interne 23 est également percée d'un trou 27 pour le passage d'une vis apte à venir en prise avec une paroi du boîtier.

Sous l'effet d'un choc subi par le projecteur 1, le boîtier 2 est entraîné longitudinalement vers l'arrière par la glace 3 que vient heurter l'obstacle. Le boîtier 2 entraîne dans son mouvement la branche interne 23 de la patte 22 tandis que la branche externe 24 reste fixée au châssis 4. La patte 22 se déforme alors plastiquement, sans rompre, par enroulement vers l'arrière, comme cela est représenté en traits interrompus sur la figure 5 (en fait, on garde dans ce mouvement une zone de déformation constante).

Deux pattes 22 sont ici prévues, fixées respectivement sur une paroi supérieure 15 et sur une paroi inférieure 16 du boîtier 2. Toutefois, il est, comme précédemment, possible d'en disposer un plus grand nombre afin d'accroître les capacités d'absorption d'énergie du projecteur 1.

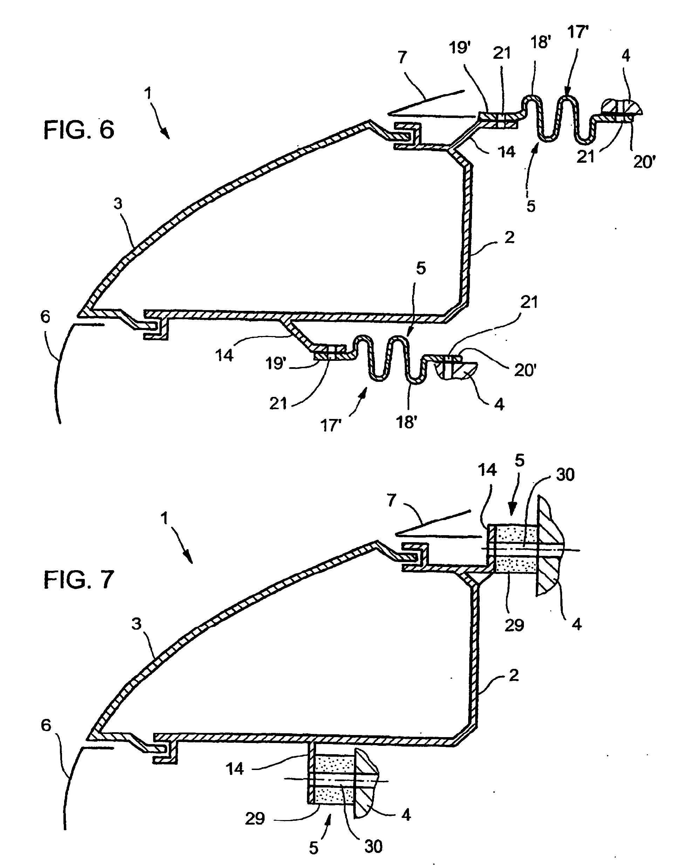

Suivant un troisième mode de réalisation, illustré sur les figures 6, 8 et 9, les moyens de liaison 5 sont aptes à travailler en compression.

Ainsi, suivant une première variante, illustrée sur la figure 6, les moyens de liaison 5 comportent une patte compressible 17' de fixation du boîtier 2 au châssis 4, qui comporte une portion centrale 18' ondulée prolongée, d'un côté, par une partie avant 19' fixée au boîtier 2, et de l'autre côté par une partie arrière 20' fixée au châssis 4, les parties 19', 20' étant percées de trous 21 pour le passage de vis de fixation.

Comme cela est visible sur la figure 6, le boîtier 2 est en outre muni d'une patte 14 en saillie pour la fixation de la partie avant 19'.

Comme on l'aura compris, cette patte compressible 17' est de forme analogue à la patte étirable 17 décrite ci-dessus. Comme elle, elle peut être réalisée par découpe et pliage d'une tôle métallique telle qu'une tôle d'acier, ou par thermoformage d'un matériau thermoplastique dur.

Lors d'un choc subi par le projecteur 1 avec un obstacle, le boîtier 2 entraîné longitudinalement vers l'arrière tend à repousser la patte 17' dont la portion ondulée 18' se comprime en se déformant plastiquement, sans rompre, sous l'effet de la force de compression ainsi exercée sur ses parties 19', 20'.

Suivant l'exemple de réalisation illustré sur la figure 7, ne faisant pas partie de la présente invention, les moyens de liaison 5 comportent une entretoise 29 interposée entre le boîtier 2 et le châssis 4, qui se présente sous la forme d'un bloc cylindrique ou prismatique réalisé dans un matériau compressible, de préférence une mousse d'aluminium qui présente de bonnes capacités d'absorption d'énergie.

Plusieurs telles entretoises 29 peuvent être disposées entre le boîtier 2 et le châssis 4, afin d'augmenter la capacité d'absorption du projecteur 1. En l'occurrence, deux entretoises 29 sont prévues, chacune étant interposée entre le châssis 4 et une patte de fixation 14 faisant saillie du boîtier 2.

Comme cela est visible sur la figure 7, chaque entretoise 29 est percé d'un trou 30 pour le passage d'une vis de fixation du boîtier 2 au châssis 4.

Au cours du choc, le boîtier 2 recule longitudinalement en provoquant la compression des entretoises 29, qui au cours de leur déformation plastique absorbent au moins une partie de l'énergie du choc.

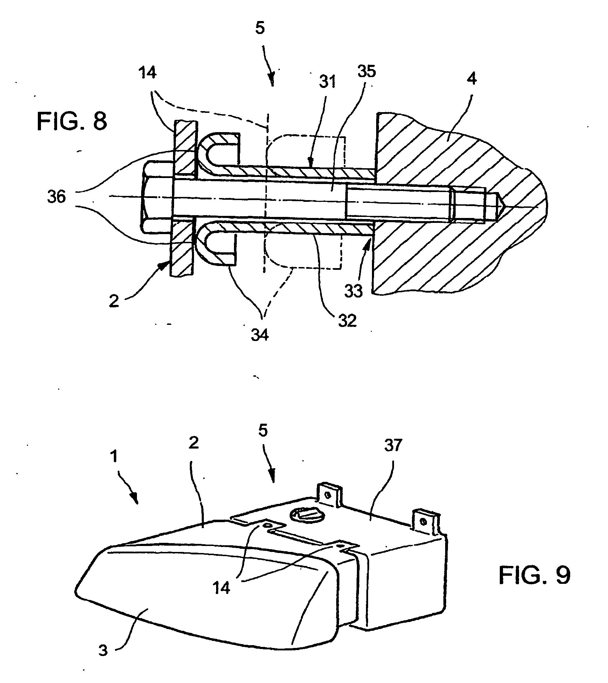

Suivant une deuxième variante, illustrée sur la figure 8, les moyens de liaison 5 comportent une entretoise 31 qui, interposée entre une paroi du boîtier formée par exemple par une patte 14 en saillie, est munie d'un fût 32 cylindrique terminé vers l'arrière par une extrémité 33 en appui contre le châssis 4, et prolongé à l'opposé, c'est-à-dire vers l'avant, par une tête 34 recourbée.

Comme cela est visible sur la figure 8, le 32 fût est creux, une vis 35 traversant conjointement la paroi 14 du boîtier et le fût 32 pour venir en prise avec le châssis 4 et ainsi assurer la fixation du boîtier 2 dont la paroi 14 vient en appui contre une partie torique 36 de raccordement de la tête 34 au fût 32.

Sous l'effet d'un choc subi par le projecteur 1, le boîtier 2 en se déplaçant longitudinalement vers l'arrière vient écraser la tête 34, la paroi 14 repoussant vers l'arrière la partie torique 36 de raccordement, tel que représenté en traits interrompus sur la figure 8. Autrement dit, l'entretoise 31 se retrousse en direction de son extrémité arrière 33.

Ainsi comprimée, l'entretoise 31 se déforme plastiquement, en absorbant sans rompre au moins une partie de l'énergie du choc.

Suivant une troisième variante, illustrée sur la figure 9, les moyens de liaison 5 du boîtier 2 au châssis 4 comportent un organe fonctionnel 37 du véhicule, organe 37 sur lequel est monté le boîtier 2.

Comme cela est visible sur la figure 9, le boîtier 2 est directement fixé à l'organe 37 par l'intermédiaire de pattes 14 en saillie, l'organe 37 étant à son tour fixé au châssis 4 du véhicule par des pattes 38.

Cet organe 37 est par exemple un filtre à air ou un réservoir de liquide lave-glace. Un tel organe 37 a l'avantage de posséder par construction une bonne capacité à absorber l'énergie d'un choc, sans rompre.

Ainsi, quel que soit le mode de réalisation choisi, les moyens de liaison 5 présentent une bonne capacité d'absorption de l'énergie d'un choc subi par le projecteur 1, au bénéfice de la sécurité des piétons dont les risques de graves dommages corporels sont ainsi réduits, l'agencement des moyens de liaison 5 permettant simultanément de limiter l'encombrement du projecteur 1.

Comme on peut le comprendre, les moyens de liaison 5 décrits ci-dessus peuvent être aisément ajoutés sur un projecteur fixe classique sans qu'il soit nécessaire de revoir en profondeur sa conception.

## Revendications

1. Projecteur de véhicule automobile, qui comporte un boîtier (2) renfermant une source lumineuse, fixé sur un châssis (4), et des moyens de liaison (5) du boîtier (2) au châssis (4), déformables plastiquement, aptes à absorber au moins une partie de l'énergie d'un choc subi par le projecteur (1), **caractérisé en ce qu'**il comporte au moins une patte (8 ; 17 ;22) de fixation du boîtier (2) au châssis (4), ladite patte
- comportant un corps (9) ajouré prolongé, d'un côté, par une partie avant (11) fixée au châssis (4), et de l'autre côté par une partie arrière (12) fixée au boîtier (4), le corps (9) étant apte à s'étirer sous l'effet d'une traction exercée sur l'une au moins desdites parties (11, 12),
ou
- comportant un corps (9'), ajouré ou non ajouré, et présentant localement au moins un rétrécissement de section le corps (9') étant prolongé, d'un côté, par une partie avant (11) fixée au châssis (4), et de l'autre côté par une partie arrière (12) fixée au boîtier (4), et étant apte à s'étirer sous l'effet d'une traction exercée sur l'une au moins desdites parties (11, 12),
ou
- présentant une portion centrale (18) ondulée prolongée, d'un côté, par une partie avant (19) fixée au châssis (4), et de l'autre côté par une partie arrière (20) fixée au boîtier (2), la portion centrale (18) étant apte à s'étirer sous l'effet d'une traction exercée sur l'une au moins desdites parties (19, 20),
ou
- présentant un profil en forme de U et comportant deux branches (23, 24) sensiblement parallèles fixées respectivement au boîtier (2) et au châssis (4) et raccordées par une portion courbe (25), la patte (22) étant apte à travailler en flexion et à se déformer par déplacement de la portion courbe (25) sous l'effet d'un choc subi par le projecteur (1),
ou
- présentant (28) une portion centrale (18') ondulée prolongée, d'un côté, par une partie avant (19') fixée au boîtier (2), et de l'autre côté par une partie arrière (20') fixée au châssis (4), la portion centrale (18') étant apte à se comprimer sous l'effet d'un choc subi par le projecteur (1).

2. Projecteur selon la revendication précédente, **caractérisé en ce que** les jours du corps (9) sont de forme rectangulaire, carrée, toute forme polygonale, hexagonale, ou en forme de losange, ou encore circulaire ou ovale.

3. Projecteur de véhicule automobile, qui comporte un boîtier (2) renfermant une source lumineuse, fixé sur un châssis (4), et des moyens de liaison (5) du boîtier (2) au châssis (4), déformables plastiquement, aptes à travailler en compression et a absorber au moins une partie de l'énergie d'un choc subi par le projecteur (1), lesdits moyens de liaison (5) comportant une entretoise (31) interposée entre le boîtier (2) et le châssis (4), réalisée dans un matériau compressible, **caractérisé en ce que** lesdits moyens de liaison (5) comportent un fut (32) cylindrique plaqué contre le châssis (4) par une première extrémité (33) et prolongé à l'opposé par une tête (34) recourbée par laquelle l'entretoise (31) est plaquée contre le boîtier (2).

4. Projecteur selon la revendication 3, **caractérisé en ce que** le fût (32) est creux.

5. Projecteur de véhicule automobile, qui comporte un boîtier (2) renfermant une source lumineuse, fixé sur un châssis (4), et des moyens de liaison (5) du boîtier (2) au châssis (4), déformables plastiquement, aptes à travailler en compression et à absorber au moins une partie de l'énergie d'un choc subi par le projecteur (1), **caractérisé en ce que** lesdits moyens de liaison (5) comportent une entretoise (37) qui est un organe fonctionnel du véhicule choisi parmi les filtres à air et les réservoirs de liquide lave-glace..

## Patentansprüche

1. Kraftfahrzeugscheinwerfer mit einem Gehäuse (2), das eine Lichtquelle umschließt und an einer Karosserie (4) befestigt ist, und plastisch verformbaren Mitteln (5) zum Verbinden des Gehäuses (2) mit der Karosserie (4), die wenigstens einen Teil der Energie eines auf den Scheinwerfer (1) ausgeübten Stoßes aufzunehmen vermögen,
**dadurch gekennzeichnet, dass** er wenigstens eine Klammer (8; 17; 22) zum Befestigen des Gehäuses an der Karosserie (4) umfasst, wobei die Klammer
- einen Körper (9) mit Öffnungen aufweist, der auf einer Seite durch ein an der Karosserie (4) befestigtes vorderes Teil (11) und auf der anderen Seite durch ein am Gehäuse (2) befestigtes hinteres Teil (12) verlängert ist, wobei der Körper (9) sich unter der Einwirkung eines auf wenigstens eines der Teile (11,12) ausgeübten Zugs auszudehnen vermag,
oder
- einen Körper (9') mit oder ohne Öffnungen aufweist, der stellenweise wenigstens eine Querschnittsreduzierung aufweist, wobei der Körper (9') auf einer Seite durch ein an der Karosserie (4) befestigtes vorderes Teil (11) und auf der anderen Seite durch ein am Gehäuse (2) befestigtes hinteres Teil verlängert ist und sich unter Einwirkung eines auf wenigstens eines der Teile (11, 12) ausgeübten Zugs auszudehnen vermag,
oder
- ein wellenförmiges Mittelstück (18) aufweist, das auf einer Seite durch ein an der Karosserie (4) befestigtes vorderes Teil (19) und auf der anderen Seite durch ein am Gehäuse (2) befestigtes hinteres Teil (20) verlängert ist, wobei das Mittelstück sich unter der Einwirkung eines auf wenigstens eines der Teile (19, 20) ausgeübten Zugs auszudehnen vermag,
oder
- ein U-förmiges Profil mit zwei im Wesentlichen parallelen, am Gehäuse (2) bzw. der Karosserie (4) befestigten Schenkeln (23, 24) aufweist, die durch ein gebogenes Stück (25) miteinander verbunden sind, wobei die Klammer (22) durchgebogen zu werden vermag und sich durch Verschieben des gebogenen Stücks (25) unter der Einwirkung eines auf den Scheinwerfer (1) ausgeübten Stoßes zu verformen vermag,
oder
- ein wellenförmiges Mittelstück (18') aufweist, das auf einer Seite durch ein am Gehäuse (2) befestigtes vorderes Teil (19') und auf der andern Seite durch ein an der Karosserie (4) befestigtes hinteres Teil (20') verlängert ist, wobei das Mittelstück (18') unter der Einwirkung eines auf den Scheinwerfer (1) ausgeübten Stoßes komprimiert zu werden vermag.

2. Scheinwerfer nach dem vorhergehenden Anspruch,
**dadurch gekennzeichnet, dass** die Öffnungen des Körpers (9) rechteckig, quadratisch, polygonal jeglicher Form, sechseckig oder rautenförmig oder auch rund oder oval sind.

3. Kraftfahrzeugscheinwerfer mit einem Gehäuse (2), das eine Lichtquelle umschließt und an der Karosserie (4) befestigt ist, und plastisch verformbaren Mitteln (5) zum Verbinden des Gehäuses (2) mit der Karosserie (4), die komprimiert zu werden vermögen und die wenigstens einen Teil der Energie eines auf den Scheinwerfer (1) ausgeübten Stoßes aufzunehmen vermögen, wobei die Verbindungsmittel (5) ein Abstandsstück (31) umfassen, das zwischen dem Gehäuse (2) und der Karosserie (4) eingefügt ist und aus einem komprimierbaren Material ausgeführt ist,
**dadurch gekennzeichnet, dass** die Verbindungsmittel (5) einen zylindrischen Schaft (32) aufweisen, der mit einem ersten Ende (33) gegen die Karosserie (4) gedrückt wird und auf der entgegengesetzten Seite durch einen gebogenen Kopf (34) verlängert wird, durch den das Abstandsstück (31) gegen das Gehäuse (2) gedrückt wird.

4. Scheinwerfer nach Anspruch 3,
**dadurch gekennzeichnet, dass** der Schaft (32) hohl ist.

5. Kraftfahrzeugscheinwerfer mit einem Gehäuse (2), das eine Lichtquelle umschließt und an der Karosserie (4) befestigt ist, und plastisch verformbaren Mitteln (5) zum Verbinden des Gehäuses (2) mit der Karosserie (4), die komprimiert zu werden vermögen und die wenigstens einen Teil der Energie eines auf den Scheinwerfer (1) ausgeübten Stoßes aufzunehmen vermögen,
**dadurch gekennzeichnet, dass** die Verbindungsmittel (5) ein Abstandsstück (37) umfassen, das ein funktionelles Organ des Fahrzeugs ist und aus den Luftfiltern und Behältern der Waschanlage ausgewählt ist.

## Claims

1. A motor vehicle headlight, which includes a casing (2) enclosing a light source and fixed on a chassis (4), and, connecting the casing (2) to the chassis (4), plastically deformable connecting means (5) which are adapted to absorb at least some of the energy from a shock suffered by the headlight (1),
**characterised in that** it includes at least one lug (8; 17; 22) for the fastening of the casing (2) to the chassis (4), the said lug either:
- comprising a perforated body (9) which is extended in length on one side by a front portion (11) fixed to the chassis (4), and on the other side by a rear portion (12) fixed to the casing (2), the body (9) being adapted to stretch in response to traction exerted on at least one of the said portions (11, 12), or
- comprising a perforated or unperforated body (9') and having at least one local reduction in its cross section, the body (9') being extended in length on one side by a front portion (11) fixed to the chassis (4), and on the other side by a rear portion (12) fixed to the casing (2), and being adapted to stretch in response to traction exerted on at least one of the said portions (11, 12), or
- having a corrugated central portion (18) which is extended in length on one side by a front portion (19) fixed to the chassis (4), and on the other side by a rear portion (20) fixed to the casing (2), the central portion (18) being adapted to stretch in response to traction exerted on at least one of the said portions (19, 20), or
- having a U-shaped profile and comprising two substantially parallel branches (23, 24) which are fixed to the casing (2) and chassis (4) respectively, and which are joined together through a curved portion (25), the lug (22) being adapted to work in bending mode and to deform, by displacement of the curved portion (25), in response to a shock suffered by the headlight (1), or
- having a corrugated central portion (18') which is extended in length on one side by a front portion (19') fixed to the casing (2), and on the other side by a rear portion (20') fixed to the chassis (4), the central portion (18') being adapted to be compressed in response to a shock suffered by the headlight.

2. A headlight according to Claim 1, **characterised in that** the openings in the body (9) are of rectangular or square form, or of any polygonal form, hexagonal, lozenge-shaped, or, again, circular or oval.

3. A motor vehicle headlight, which includes a casing (2) enclosing a light source and fixed on a chassis (4), and, connecting the casing (2) to the chassis (4), plastically deformable connecting means (5) which are adapted to work in compression and to absorb at least some of the energy from a shock suffered by the headlight (1), the said connecting means comprising a spacing member (31) interposed between the casing (2) and chassis (4), the spacing member being made of a compressible material, **characterised in that** the said connecting means (5) include a cylindrical shank (32), which is abutted against the chassis (4) through a first one (33) of its ends and extended at the other end by a curved-back head (34) through which the spacing member (31) is abutted against the casing (2).

4. A headlight according to Claim 3, **characterised in that** the shank (32) is hollow.

5. A motor vehicle headlight, which includes a casing (2) enclosing a light source and fixed on a chassis (4), and, connecting the casing (2) to the chassis (4), plastically deformable connecting means (5) which are adapted to work in compression and to absorb at least some of the energy from a shock suffered by the headlight (1), **characterised in that** the said connecting mans comprise a spacing member (37), which is a functional component of the vehicle selected from the air filters and the reservoirs for screen washing liquid.
